# EUROPÄISCHE PATENTSCHRIFT

(11) **EP 1 302 604 B1**
(45) Veröffentlichungstag und Bekanntmachung des Hinweises auf die Patenterteilung: **03.01.2007**
(21) Anmeldenummer: 02022778.1
(22) Anmeldetag: 11.10.2002
(51) Int. Cl.: E04C 2/52, F24D 3/14, F24D 3/16

(54) **Decken- und Wandelement**
Ceiling and wall element
Element de plafond et de mur

(30) Priorität: 12.10.2001 DE 10150541
(43) Veröffentlichungstag der Anmeldung: 16.04.2003
(73) Patentinhaber: Bühler, Armin, 87733 Frechenrieden (DE)
(72) Erfinder: Bühler, Armin, 87733 Frechenrieden (DE)
(74) Vertreter: Pfister, Stefan Helmut Ulrich

(56) Entgegenhaltungen:
- EP-A- 0 992 637
- GB-A- 775 890

## Beschreibung

Die Erfindung betrifft ein Decken- und Wandelement, mit in dem Element integriertem Kühl- bzw. Heizleitungssystem für eine Wand- und/oder Deckenheizung nach dem Wärmestrahlungssystem.

Um Räume zu beheizen sind verschiedene Heizungssysteme bekannt. Neben flächigen Heiz- und Kühlkörpern, die eine Luftbewegung verursachen und damit eine Staubbelastung der Raumluft bewirken, sind auch Systeme zur Lufterwärmung bzw. Luftkühlung bekannt, bei denen die temperierte Luft in den zu temperierenden Raum geführt wird. Auch hier entsteht das oben beschriebene Problem der Luftbewegung.

Des weiteren sind Fußbodenheizungen bekannt, die den sie umgebenden Estrich erwärmen. Dies führt zu einer aufsteigenden Warmluft und ebenfalls zu einer verstärkten Belastung der Raumluft mit Staubpartikeln. Außerdem werden durch diese Lösung die Fußbodenaufbauten insgesamt erhöht, was a) zu einer Verringerung der Raumhöhe und b) zu einer stärkeren statischen Belastung der tragenden Elemente selbst führt. Außerdem führt diese Maßnahme zu einer Verteuerung der Baumaßnahme insgesamt. Bei Fußbodenheizungen ist außerdem die Auswahl der zur Verfügung stehenden Bodenbeläge eingeschränkt.

Bei den bekannten Wand-, Heiz- und Kühlsystemen müssen besondere Putzaufbauten aufgebracht werden und außerdem muß dafür Sorge getragen werden, daß es bei einer späteren Beanspruchung der Wand nicht zu Beschädigungen der Heiz- bzw. Kühlschläuche oder Leitungen kommt. Deckenheizungssysteme nach dem Wärmestrahlungsprinzip werden üblicherweise als abgehängte bzw. untergehängte Decken ausgebildet. Dadurch werden ebenfalls die Raumhöhen verringert und die Baukosten erhöht.

Es sind weiterhin Systeme zur Betonkernaktivierung bekannt. Hier werden die heiz- oder kühlmedienführenden Leitungen bzw. Kanäle in, unter oder auf der Decke beziehungsweise Wand angebracht. Der gewünschte Effekt besteht in der Speicherung der Heiz- bzw. Kühlenergie in dem Beton bzw. der Baumasse und der zeitverzögerten Abgabe dieser Energie an die Raumluft. Es handelt sich dabei um ein sehr träges Heiz- bzw. Kühlsystem. Zu dem erfordert die Erstellung dieser Deckensysteme, insbesondere wenn Sie nicht untergehängt sind, einen hohen Zeitaufwand auf der Baustelle, da es sich durchweg um vor Ort herzustellende Systeme handelt. Es findet außerdem ein gleichmäßiger Temperaturfluß zu beiden Decken- bzw. Wandoberflächen hin statt. Dadurch wird das unterschiedliche Temperieren der durch das Wand- oder Deckenelement getrennten Räume erschwert.

Aus der Druckschrift DE 41 37 753 ist ein Verbundplattenelement als Kühl- oder Heizbauplatte bekannt. Die Erfindung betrifft ein Fertigbauelement für Decken- und Wandheizung bzw. Kühlung auf der Grundlage eines Kapilarrohrsystemes. Es zeichnet sich durch eine feste wärmeübertragungsschlüssige Einbauart der Kapilarrohre in Nuten aus, die in ein erstes Fertigbauelement mit wärmeleitenden Eigenschaften eingebracht werden und durch eine freie Beweglichkeit der Sammelrohre, in die die Kapilarrohre einmünden. Diese Verbundbauplattenelemente sind insbesondere dadurch gekennzeichnet, daß sie vorzugsweise aus Gips mit einer zweiten wärmeleitenden Fertigplatte versehen sind, wobei die Kapilarrohre Berührungen zu dieser wärmeleitenden Platte aufweisen. Hierbei handelt es sich um eine untergehängte Konstruktion bzw. aufgesetzte Konstruktion an Wänden, welche statisch nicht wirksam ist, insbesondere muß die Tragkonstruktion entsprechend dimensioniert werden. Insbesondere ist der Aufwand zur Befestigung nachträglich auf der Baustelle erheblich. Auch die zentrale Rohrleitungsführung ist äußerst ungünstig gestaltet, so daß ein sehr hoher fertigungstechnischer Aufwand für diese Lösung entsteht.

Es ist weiterhin aus der Druckschrift DE 37 28 730 eine Vorrichtung zur Klimatisierung von Raumluft bekannt. Dabei handelt es sich um plattenförmige Heizkörper, bei denen ein zur Wärmespeicherung geeigneter Werkstoff durch ein Wärmeträgermedium beheizt wird. Mit diesen Heizkörpern, welche grundsätzlich auch als Kühlkörper benutzbar sind, ist jedoch nur eine Temperatursteuerung möglich, die sehr träge auf Temperaturveränderungen anspricht. Insbesondere ist diese Lösung dafür geeignet, um bestimmte Raumluft-Feuchtigkeitssteuerungen innerhalb des zu beheizenden Raumes zu bewerkstelligen. So ist der Aufbau dieser Platte derart ausgeführt, daß die Grundsubstanz der zwei Bauteile der Platten aus den Komponenten Lehm und Zement besteht, welcher bei Temperaturen von ca. 500 Grad Celsius gebrannt ist. Damit entsteht ein hoch kapilarer und wärmespeicherfähiger Werkstoff. Diese Vorrichtung zum Klimatisieren von Raumluft ist wie einführend bereits erwähnt, lediglich als plattenförmiger Heizkörper entweder als Vorsatzelement vor eine Wand bzw. als Unterhangelement unter eine Decke geeignet, wobei statisch besondere Belastungen beachtet werden müssen. Auch der Einsatz als Fußbodenheizung scheint aufgrund der Aufgabe des Elementes für einen Feüchtigkeitsaustausch innerhalb des Raumes mit der Raumluft zu sorgen sehr problematisch.

Aus der Druckschrift CH 565 918 ist ein Deckenelement und ein Verfahren zur Herstellung des selben bekannt. Auch bei diesem Deckenelement handelt es sich um einen sogenannten Flächenheizleiter, der nach dem Prinzip arbeitet, daß die in dem Flächenheizleiter vorhandene Wärme gespeichert wird und dann nur sehr langsam an den zu beheizenden oder zu kühlenden Raum abgegeben wird. Insbesondere ist für diese Lösung fertigungstechnisch ein erheblicher Aufwand erforderlich, da die Fußbodenaufbauten dann vor Ort noch aufgebracht werden müssen. Ähnlich wie bei Filigrandecken, welche zur Herstellung der endgültigen statischen Eigenschaften vor Ort mittels Beton noch aufgefüllt werden müssen, ist dabei ein enormer Aufwand zur Herstellung der eigentlichen Decke und der dann statischen notwendigen Eigenschaften erforderlich. Dies erfordert beispielsweise das Einschalen und Abstützen der vorgefertigten Deckenelemente, bevor sie mittels Beton aufgefüllt werden. Aus ästhetischen Gründen wird dann beispielsweise das Deckenelement gegebenenfalls auch noch mit Gipsplatten abgedeckt, was zu einer weiteren Erhöhung des Fertigungsaufwandes führt.

Aus der DE 1 055 213 ist eine Rippendecke, insbesondere Geschoßdecke mit Heiz- bzw. Kühlrohrleitungen und ein Verfahren zur Herstellung dieser Decke bekannt. Bei diesem System handelt es sich um eine Ziegeldecke mit statisch nicht mittragenden Steinen. Der Einbau der Heiz-/Kühlregister erfolgt in einer zweiten unteren Ziegellage. Dadurch werden sehr viele Einzelteile benötigt, deren Herstellung, Lagerung und Verarbeitung sehr zeit- und somit kostenaufwendig ist. Zudem sind die Heizleitungen im Beton eingebettet. Dadurch wird die Reaktionszeit für die Heizung bzw. Kühlung drastisch verschlechtert.

Ein vorgefertigtes Bauelement, in das bereits ein Heizungssystem integriert ist, ist beispielsweise aus der EP 0 922 637 A 1 bekannt. Dieses wird als sogenannte Filigrandecke bezeichnet. Es ist allerdings erforderlich, dieses Heizungssystem mit Rohrklemmleisten zu versehen, um die Rohre festzulegen. Des Weiteren besitzt dieses Bauelement noch keine endgültigen statischen Eigenschaften. Es kann zwar nach der Vorfertigung zum Bauvorhaben transportiert werden, es muss aber zur Herstellung der endgültigen statischen Eigenschaften zunächst von unten eingeschalt und ausgesteift werden. Der dann noch fehlende Beton ist als Ortbeton aufzubringen. Danach muss das Element vor Ort in entsprechender Zeit noch ausgesteift bleiben, damit der aufgebrachte Beton abbinden bzw. aushärten kann. Dieses Bauelement ist somit nach der Montage nicht gleich weiterverarbeitbar.

Ausgehend von diesem zuvor beschriebenen Stand der Technik ist es Aufgabe der Erfindung, eine Lösung zur Verfügung zu stellen, die günstiger herzustellen ist und die eine weitere Erhöhung des Vorfertigungsgrades bei der Herstellung von Bauwerken ermöglicht.

Erfindungsgemäß wird diese Aufgabe dadurch gelöst, daß ein Decken- und Wandelement mit in dem Element integrierten Kühl- bzw. Heizleitungssystem für eine Wand- und/oder Deckenheizung zur Verfügung gestellt wird, die nach dem Wärmestrahlungssystem wirkt und die sich dadurch auszeichnet, daß das Decken- und Wandelement als vorgefertigtes selbsttragendes Bauelement mit endgültigen statischen Eigenschaften ausgebildet ist und in dem Bauelement wenigstens eine Hohlkammer zur Verdrängung von Vergußmaterial vorgesehen ist. Das Bauelement ist weitgehend unterstützungsfrei weiterverarbeitbar, derart, dass es nach der Montage sofort weiterverarbeitbar ist.

Durch diese Lösung wird erreicht, daß bereits in der Vorfertigung alle für das statische System notwendigen Bestandteile und auch die Einzelteile des Kühl- bzw. Heizleitungssystems für eine Wand- und/oder Deckenheizung in das statisch selbsttragende Bauelement eingebracht werden. Es gelingt auch, die notwendigen Dämmschichten bzw. Abstrahlsysteme bzw. -schichten gleichzeitig bei der Herstellung des vorgefertigten Bauelementes in dieses einzubringen. Der Vorteil besteht darin, daß zum einen der Aufwand für die Elemente insgesamt gesenkt wird. Die erforderlichen Raumhöhen werden für Heizungs- bzw.

Kühlsysteme nach dem Wärmestrahlungssystem erheblich verringert. Auch die Wandaufbauten von Wänden, deren Elemente jetzt aus den erfindungsgemäßen Decken- und Wandelement gefertigt werden, ist insgesamt wesentlich günstiger zu realisieren, als dies mittels aus der aus dem Stand der Technik bisher bekannten Lösungen möglich ist.

Die in das Bauelement eingelegten Rohrleitungen des Heiz- bzw. Kühlsystemes werden den Erfordernissen der Nutzungsräume angepasst und dann entsprechend der jeweiligen Bedingungen vor Ort miteinander verbunden. Die entstehenden Kreise können von einem wärme- oder kälteführenden Medium zur Temperierung der an das Fertigteil angrenzenden Räume durchströmt werden. Dabei wirkt sich auch die erzielte Reduktion des Gewichtes durch die zuvor beschriebenen Maßnahmen positiv auf die Reaktionszeit der Heizung bzw. Kühlung aus, da die mit zu temperierende Masse deutlich verringert ist.

In Abhängigkeit der Lage der eingebauten Leitungen kann eine Hauptkühl- oder Hauptheizseite des Bauelementes festgelegt werden. Durch die in das Bauelement eingebauten wärmedämmenden Baustoffe oder Hohlräume ist es zudem möglich, durch das Fertigteil selbst diesen Effekt weiter zu verstärken.

Ein weiterer positiver Effekt durch die Reduktion des Gewichtes des Fertigteiles besteht in den geringeren Transport- und Krankosten. Das Gesamtsystem ist weitgehend unterstützungsfrei und dadurch schnell zu verarbeiten. Es unterscheidet sich beispielsweise von den bekannten Filigrandecken dadurch, daß es zur Herstellung der endgültigen statischen Eigenschaften nicht nochmals von unten eingeschalt und abgesteift werden muß, sondern es hat gleich die erforderlichen statischen Eigenschaften und kann nach der Montage sofort weiter bearbeitet werden.

Eine weitere Variante des Decken- und Wandelementes ist dadurch angegeben, daß das Rohrleitungssystem für das Kühl- bzw. Heizleitungssystem werkseitig in eine armierte Filigrandecke integriert wird. Produktions-, Bau- und Nutzungstechnisch ergeben sich die gleichen Vorteile wie oben beschrieben, wenn auch in zum Teil abgeschwächter Form. Nach dem Verbinden der einzelnen Leitungssysteme und dem Übergießen mit Beton und dessen Aushärtung entsteht wieder ein vorzugsweise nach unten wärme- bzw. kälteabstrahlendes Bauelement. Dieser Effekt kann durch die zuvor beschriebenen Maßnahmen noch verstärkt werden.

Eine vorteilhafte Weiterbildung des erfindungsgemäßen Decken-und Wandelementes zeichnet sich dadurch aus, daß das statisch selbsttragende Bauelement als Stahlbeton- und/oder Spannbetonelement ausgebildet ist. In der Vorfertigungsstätte wird dabei der Decken- und Wandaufbau derart gestaltet, daß zunächst die Einzelteile des Kühl- bzw. Heizleitungssystemes fertigungstechnisch in eine Schalungsform eingebracht werden, nachdem dieser Schichtaufbau beispielsweise durch Verguß mittels gut wärmeleitfähigen Materialien erfolgt ist, wird gegebenenfalls eine Dämmschicht aufgebracht. Dann erfolgt das Auflegen der Stahlbetonbewehrung bzw. der Elemente für die Spannbetonausführung. Dies wird dann üblicherweise mit Betongemisch aufgefüllt, so daß das gesamte Decken- und Wandelement als Stahlbetonelement nach dem Aushärten zur Verfügung steht. Gegebenenfalls kann auf diesen Aufbau dann noch eine weitere Dämmschicht und ein Kühl- bzw. Heizleitungssystem für eine Beheizung eines sich über dem Deckenelement befindlichen Raumes aufgebracht werden. Der Vorteil ist der, daß alle notwendigen Arbeiten zur Herstellung des Decken- und Wandelementes bereits in der Vorfertigungsstätte durchgeführt,werden können. Vor Ort erfolgt dann lediglich der Anschluß der für das Heiz- bzw. Kühlsystem notwendigen Leitungen.

Erfindungsgemäß wurde auch gefunden, daß es von Vorteil ist, wenn das Decken- und Wandelement aus Formsteinen gebildet ist bzw. bereits in der Vorfertigung aus Formsteinen als vorgefertigtes Element erhalten wurde. Vorteilhafterweise kann man dabei Formsteine zum Einsatz bringen, die bereits entsprechende Ausnehmungen seitlich aufweisen, so daß ein Verguß mittels Beton erfolgen kann. Das Kühl- bzw. Heizleitungssystem kann dabei beispielsweise unterhalb der eigentlichen Formsteinelemente in Ausnehmungen klemmend oder dergleichen eingebracht werden. Auch diese Schichten können dann mittels gut wärmeleitfähigen Materialien vergossen werden. Gegebenenfalls sind in den seitlichen Ausnehmungen der Formsteine zur Aussteifung ein oder mehrere Bewehrungseisen einzubringen. Die so hergestellten und ausgehärteten Elemente sind ebenfalls montagefähig und besitzen die zuvor bereits beschriebenen vorteilhaften Eigenschaften.

Eine Weiterbildung des erfindungsgemäßen Decken- und Wandelementes zeichnet sich dadurch aus, daß das Kühl- bzw. Heizleitungssystem auf der dem zu beheizenden Raum zugewandten Seite angeordnet ist. Durch diese Art der Anordnung wird insbesondere erreicht, daß die Effektivität bzw. Effezienz des Kühl- bzw. Heizleitungssystems insgesamt erhöht wird.

Selbstverständlich ist es auch möglich, beispielsweise für Zwischenwände bzw. Zwischendecken, wie bereits zuvor beschrieben, zwei Kühl- bzw. Heizleitungssysteme auf der Ober- bzw. Unterseite bzw. auf beiden Seiten der Wand beziehungsweise Decke anzuordnen. Durch diese Ausführung, insbesondere dann, wenn zwischen den einzelnen Systemen entsprechende Dämmschichtten und Abstrahlfolien oder -beschichtungen angebracht sind, ist es möglich, die Räume unterschiedlich zu kühlen bzw. zu beheizen.

Ein weiterer Aspekt der erfindungsgemäßen Lösung ist dadurch angegeben, daß auf der dem zu beheizenden Raum abgewandten Seite des Bauelementes eine Dämmstoffschicht, vorzugsweise mit reflektierender Beschichtung ausgebildet ist. Insbesondere ist dabei vorgesehen, daß die Wärmereflektionen zum zu beheizenden Raum hin erfolgt. Die Vorteile dieser Lösung wurden zuvor bereits beschrieben.

Eine Weiterbildung der Erfindung sieht vor, daß die Dämmstoffschicht ein wärmedämmender Putz ist. Es sind jedoch auch durchaus andere wärmedämmende Materialien denkbar.

Erfindungsgemäß wurde auch gefunden, daß es von Vorteil ist, wenn die Kühl- bzw. Heizleitungssysteme derart ausgebildet sind, daß sie selbst statisch wirksam werden. Dies kann beispielsweise dadurch erreicht werden, daß die Kühl- bzw. Heizleitungssyste aus Metall- bzw. Kunststoffhohlprofilen mit ausreichenden statischen Eigenschaften gebildet sind. Wenn die Metall- bzw. Kunststoffhohlprofile beispielsweise in Art einer Schlange verlegt sind, ist es dann von Vorteil, wenn diese Profile mittels aussteifender Verbindungselemente untereinander verbunden werden. Diese Verbindungselemente sind insbesondere vorgesehen, um das statische System weiter zu verstärken. Die Metall- bzw. Kunststoffhohlprofile sind dabei aus für diese Verwendung bisher bekannten Materialien wie Stahl, nicht rostender Stahl, Kupfer, oder entsprechendem Kunstoff, beispielsweise Polyäthylen (PET) hergestellt.

In einer vorteilhaften Weiterbildung der Erfindung ist es vorgesehen, daß in dem Decken- und/oder Wandelement mindestens eine Hohlkammer zur Verdrängung von Vergußmaterial angeordnet ist. Dies ist insbesondere bei Stahlbeton- bzw. Spannbetonelementen von Vorteil. Es bietet sich aber auch dann an, wenn das Decken- und Wandelement aus Formsteinen gebildet ist. Die Hohlkammer ist dafür geeignet, daß weniger Vergußmaterial benötigt wird. Man kann diese Hohlkammern entweder mit Dämmstoffmaterialien, welche preislich günstiger als das Vergußmaterial sind, bzw. die ein geringeres spezifisches Gewicht aufweisen, ausfüllen. Die Hohlkammern können auch aus Formsteinen selbst gebildet sein.

Eine Weiterbildung des Decken- und Wandelementes zeichnet sich dadurch aus, daß die Hohlkammern längs zur Spannrichtung des Decken- bzw. Wandelementes angeordnet sind.

Entsprechend einer vorteilhaften Ausgestaltung der Erfindung ist es vorgesehen, daß das bzw. die Kühl- bzw. Heizleitungssystem/e in diesen Hohlräumen angeordnet sind. Damit wird die Decken- bzw. Elementhöhe insgesamt weiter verringert, so daß diese Lösung als besonders günstig zu bezeichnen ist.

Ein Aspekt des erfindungsgemäßen Decken- und Wandelementes zeichnet sich dadurch aus, daß auf der dem zu beheizenden Raum zugewandten Seite des Decken- und Wandelementes beziehungsweise des statisch selbsttragenden Bauelementes eine abstrahlfördernde Beschichtung vorgesehen ist. Durch die Anordung dieser abstrahlfördernden Beschichtung ist es möglich, daß die Effizienz und insbesondere die Reaktionsfähigkeit des Heiz- bzw. Kühlsystemes insgesamt sehr erhöht wird. Diese abstrahlfördernde Beschichtung kann gemäß einer Weiterbildung der Erfindung ein thermisch wirksamer Putz sein.

Erfindungsgemäß wurde auch gefunden, daß die Formsteine des Decken- und Wandelementes aus gebranntem Ton bzw. aus Lehm erhaltenen Ziegeln gebildet ist. Derartige Formsteine sind bekannt, sie werden lediglich in einer Vorfertigunsstätte zu entsprechenden Decken- bzw. Wandelementen zusammengefügt, wobei das Kühl- bzw. Heizleitungssystem dort bereits eingebracht wird. Es ist dabei von Vorteil, wenn die seitlichen Ränder der Formsteine miteinander mittels Beton verbunden werden. Dabei ist es weiterhin von Vorteil, wenn sich der Beton bzw. andere Verbindungsmittel in U-förmigen Ausnehmungen in den seitlichen Rändern der Formsteine befindet bzw. dort hineingefüllt wird. Es ist weiterhin von Vorteil, wenn die Formsteine durch bewehrte Stahlbetonträger oder Stahlträger miteinander verbunden werden. Dies erfolgt bekanntermaßen dadurch, daß die Stahlträger eben beziehungsweise flach und zueinander beabstandet aufgelegt werden und dann die Formsteine entsprechend aneinandergefügt werden. Nach dem Einbringen des Heiz- bzw. Kühlsystems bzw. der statischen Elemente erfolgt dann der Verguß der einzelnen Formsteine mittels Beton bzw. anderer Bindemittel.

Das erfindungsgemäße Decken- und Wandelement zeichnet sich auch dadurch aus, daß die Formsteine aus Beton bzw. Porenbeton gebildet sind. Auch die Verwendung derartiger Materialien ist für die erfindungsgemäße Ausführung des Decken- und Wandelementes geeignet. Der Deckenaufbau und die Integration des Kühl- bzw. Heizleitungssystemes ist dabei analog der zuvor beschriebenen Lösungen vorgesehen.

Gemäß einer Weiterbildung des erfindungsgemässen Decken- und Wandelementes ist es von Vorteil, wenn die Formsteine an der dem jeweiligen zu beheizenden Raum des Gebäudes zugewandten Stirnseite mindestens eine Rinne aufweist, die zum Einlegen bzw. Festklemmen des Kühl- bzw. Heizleitungssystemes geeignet ist. Dadurch gelingt es, den Wandaufbau weiter zu minimieren und trotzdem ästhetisch sehr ansprechende Decken bzw. Wandgestaltungen zu realisieren. Auch das Anbringen von Abstrahlbeschichtungen, derart, daß die Wärmestrahlung zu dem beheizenden Raum hin abgelenkt wird, ist bei diesen Systemen möglich, indem beispielsweise die Beschichtungen vor dem Einlegen bzw. Festklemmen des Kühl- bzw. Heizleitungssystemes aufgebracht oder eingelegt werden.

Ein weiterer Aspekt der erfindungsgemäßen Lösung ist dadurch angegeben, daß die Rinne sowohl an der Ober- und Unterseite des Decken bzw. Wandelementes bzw. beidseitig des Decken- und Wandelementes vorgesehen ist. Damit ist zum einen eine Beheizung bzw. Kühlung von oberhalb bzw. unterhalb des Deckenelementes liegenden Räumen ermöglicht. Bei Zwischenwänden ist dies, wie bereits zuvor beschrieben, auch zu unterschiedlichen Temperierung von Räumen, die durch dieses Wandelement dann getrennt werden, ermöglicht.

Es wurde weiterhin gefunden, daß sich das erfindungsgemäße Decken- und Wandelement dadurch auszeichnet, daß die Rinne eine solche Tiefe aufweist, daß das Kühl- bzw. Heizleitungssystem nicht oder nur geringfügig aus dem Decken- bzw. Wandelement hervorsteht. Dies dient der weiteren Minimierung der Wandstärke bei Gewährleistung aller bisher zuvor beschriebenen positiven Eigenschaften.

Die Erfindung wird nachfolgend anhand von Ausführungsbeispielen weiter beschrieben.

Es zeigen:
- Fig. 1: eine Schnittansicht durch ein als Stahlbetonelement ausgeführtes Bauelement;
- Fig. 2: eine Schnittdarstellung durch ein aus Formsteinen gebildetes Bauelement;
- Fig. 3: eine weitere Ausführungsform der Erfindung mit Formsteinen;
- Fig. 4: eine Schnittdarstellung durch ein Bauelement als Fertigteil mit Hohlkammern;
- Fig. 5: eine Schnittdarstellung durch ein Bauelement als Fertigteil mit wärmedämmenden Baustoffen;
- Fig. 6: eine Schnittdarstellung durch ein Bauelement als Fertigteil mit Hohlkammern aus Röhren und
- Fig. 7: eine Schnittdarstellung durch ein Bauelement als Fertigteil mit Hohlkammern aus Schalungskörpern.

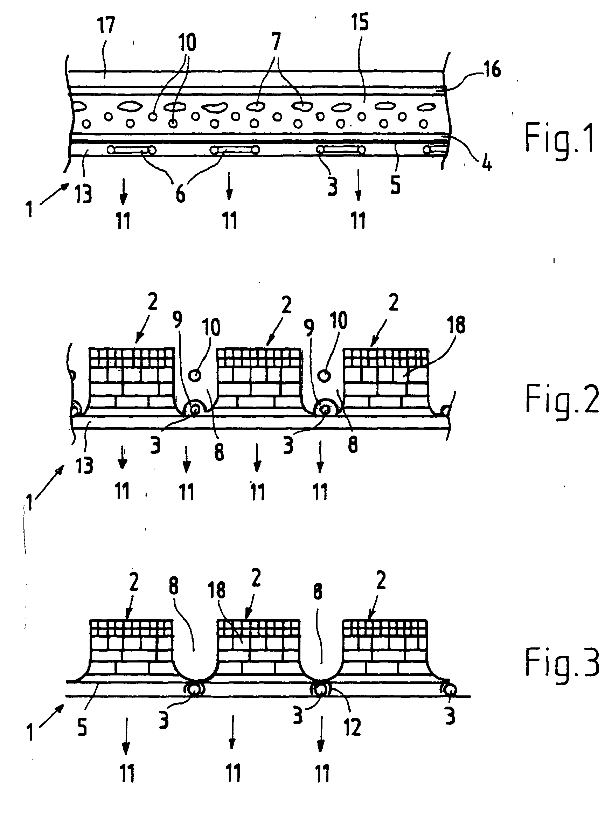

Die Fig. 1 zeigt eine Schnittansicht durch ein als Stahlbetonelement ausgeführtes erfindungsgemäßes Bauelement. Das statisch selbsttragende Bauelement ist dabei mit dem Bezugszeichen 1 bezeichnet. Mit dem Bezugszeichen 3 sind die Kühl- beziehungsweise Heizleitungen des Kühl- beziehungsweise Heizleitungssystems 3 bezeichnet. Das Kühl- beziehungsweise Heizleitungssystem ist in einer abstrahlfördernden Beschichtung 13 bzw. Schicht angeordnet. Die einzelnen Leitungen des Kühlbeziehungsweise Heizleitungssystems 3 sind mit aussteifenden Verbindungselementen 6 untereinander verbunden, so daß die statische Wirkung, welche durch die Rohre beziehungsweise Hohlkörper des Kühl- beziehungsweise Heizleitungssystems erreicht wird, insgesamt weiter verbessert ist. Oberhalb der abstrahlfördernden Beschichtung 13 ist eine reflektierende Beschichtung 5 angeordnet. Dies kann beispielsweise eine Folie aus Aluminium beziehungsweise anderen, abstrahlenden Materialien sein. Die reflektierende Beschichtung 5 kann auch durch ein Baumaterial angegeben sein, welches eine sehr schlechte Wärmeleitfähigkeit und glatte Oberfläche aufweist.

Oberhalb der reflektierenden Beschichtung 5 ist in diesem Ausführungsbeispiel eine Dämmschicht 4 aufgebracht. Dadurch wird erreicht, daß beispielsweise bei der Ausführung als Deckenelement die wärme nicht unnütz nach oben abgeleitet wird, wenn sich beispielsweise oberhalb des Deckenelementes ein zu kühlender Raum beziehungsweise ein Dachelement befindet. Oberhalb der Dämmschicht 4 ist dann die eigentlich tragende Stahlbetonschicht 15 angeordnet. In dieser Stahlbetonschicht 15 befinden sich die Bewehrungseisen beziehungsweise -stähle 10. Die Anordnung der Bewehrungsstähle ergibt sich aus der jeweils statischen Anforderung, die an das Bauelement gestellt wird. Wenn beispielsweise geringere statische Anforderungen an das Bauelement gestellt sind, kann die Bewehrung 10 in der Stahlbetonschicht 15 dann entfallen, wenn das Kühl- beziehungsweise Heizleitungssystem 3 selbst ausreichende statische Eigenschaften besitzt, die das gesamte Element tragen.

In der Stahlbetonschicht 15 sind Hohlkörper beziehungsweise Hohlkammern 7 angeordnet. Diese sollen zur Gewichtsersparnis und zur weiteren Wärmedämmung des Elementes beitragen. Für den Fall einer Ausführung als Deckenelement ist gemäß Fig. 1 oberhalb der Stahlbetonschicht eine Trittschalldämmung 16 ,vorgesehen. Auf dieser Trittschalldämmung 16 ist üblicherweise ein Estrich 17 aufgebracht.

Die Fig. 2 zeigt eine Schnittdarstellung durch ein aus Formsteinen gebildetes Bauelement 1. Dieses ebenfalls statisch selbsttragende beziehungsweise statisch selbst wirksame Bauelement 1 ist dabei aus Formsteinen 2 gebildet. Diese Formsteine können aus Ziegelmaterial mit entsprechenden Hohlräumen 18 oder aus Beton beziehungsweise Porenbeton angefertigt sein. In der Ausführungsform gemäß der Fig. 2 ist das Kühl- beziehungsweise Heizleitungssystem 3 in Rinnen 9 eingebettet, die sich an den seitlichen, U-förmigen Ausnehmungen 8 der Formsteine 2 anschließen. In diese Rinnen 9 können die Kühlbeziehungsweise Heizleitungsrohre eingelegt beziehungsweise eingeklemmt werden. Auch bei dieser Ausführungsform ist es möglich, vor dem Einfügen des Kühl- beziehungsweise Heizleitungssystemes 3 eine reflektierende Beschichtung 5 ein- beziehungsweise aufzubringen. In den U-förmigen Ausnehmungen 8 befinden sich die Stähle der Bewehrung sowie beispielsweise eine Betonausgußmasse. Nach dem Erhärten der Betonausgußmasse ist selbstverständlich das Bauelement 1 statisch selbsttragend. Zur Verbesserung der wärmeabstrahlenden Eigenschaften ist unterhalb des Bauelementes 1 eine abstrahlfördernde Beschichtung 13 aufgebracht. Diese abstrahlfördernde Beschichtung 13 ist dabei gleichzeitig als Deckenputz zu betrachten und erfüllt damit auch bauästhetisch gehobene Anforderungen. Mit dem Bezugszeichen 11 sind die Strahlen der Wärmestrahlung bezeichnet. Das Bezugszeichen 18 bezeichnet die Hohlräume der Formsteine 2, wie sie heutzutage üblicherweise in derartigen Formsteinen enthalten sind und die insbesondere der weiteren Verbesserung der wärme- und schalldämmenden Eigenschaften des Bauelementes 1 dienen.

Die Fig. 3 zeigt eine weitere Ausführungsform der Erfindung mit Formsteinen 2. Im Unterschied zur Fig. 2 sind dabei die Leitungssysteme des Kühl- beziehungsweise Heizleitungssystemes 3 unterhalb der U-förmigen Ausnehmungen mit Befestigungselementen 12 angebracht. Die Ausführungsform der Befestigung mittels Befestigungselementen 12 ermöglicht selbstverständlich auch die Anordnung des Kühl- beziehungsweise Heizleitungssystemes 3 an anderen Stellen des Bauelementes 1. Die anderen technischen Elemente entsprechen den bereits in den vorhergehenden Ausführungsbeispielen vorgestellten technischen Merkmalen und sind analog zu betrachten.

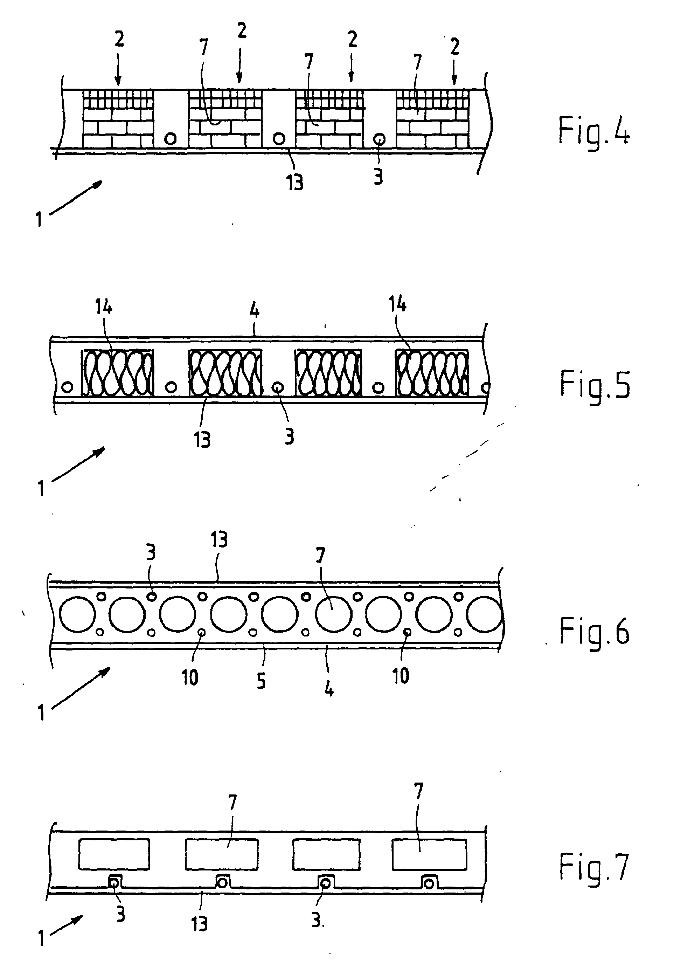

Die Fig. 4 zeigt einen Teilausschnitt aus einem Bauelement 1 als Fertigteil mit Hohlkammern 7. Die Hohlkammern 7 sind dabei aus Formsteinen 2 erhalten, die aus Ziegel, Beton oder ähnlichen Baumaterialien gefertigt wurden.

Die Fig. 5 zeigt eine Schnittdarstellung durch ein Bauelement 1 als Fertigteil mit wärmedämmenden Baustoffen. Hierbei ist ebenfalls nur ein Teil des gesamten Bauelementes 1 gezeigt. Die wärmedämmenden Baustoffe, welche in einen Teil des Bauelementes 1 hierbei eingebracht wurden, sind beispielsweise Porenbeton oder andere Dämmstoffe wie Schaumpolystyrol, Mineralwolle oder dergleichen. Die weiteren Bezugszeichen sind dabei schon vorgestellt worden und entsprechen den bereits beschriebenen, so daß auf eine erneute Vorstellung verzichtet wird.

Die Fig. 6 zeigt eine Schnittdarstellung durch einen Teil eines Bauelementes als Fertigteil mit Hohlkammern, die als Röhren ausgebildet sind. Die Hohlkammern 7 sind dabei aus Röhren beispielsweise Drainagerohren, KG-Rohren oder ähnlichem gebildet.

In der Fig. 7 ist eine weitere Schnittdarstellung durch einen Teil eines Bauelementes 1 als Fertigteil mit Hohlkammern aus Schalungskörpern gebildet. Die Hohlkammern 7 werden dabei aus üblicherweise dafür verwendeten und bekannten Schalungskörpern gefertigt.

## Patentansprüche

1. Decken - und Wandelement, mit in dem Element integriertem Kühl- bzw. Heizleitungssystem für eine Wand- und/oder Deckenheizung nach dem Wärmestrahlungssystem, **dadurch gekennzeichnet, daß** das Decken- und Wandelement als vorgefertigtes selbsttragendes Bauelement (1) mit endgültigen statischen Eigenschaften ausgebildet ist, in dem Bauelement wenigstens eine Hohlkammer (7) zur Verdrängung von Vergußmaterial vorgesehen ist und das Bauelement weitgehend unterstützungsfrei weiterverarbeitbar ist, derart, daß es nach der Montage sofort weiterverarbeitbar ist.

2. Decken- und Wandelement nach Anspruch 1, **dadurch gekennzeichnet, daß** das statisch selbsttragende Bauelement (1) als Stahlbeton- und/oder Spannbetonelement ausgebildet ist.

3. Decken- und Wandelement nach einem oder beiden der vorhergehenden Ansprüche, **dadurch gekennzeichnet, daß** das statisch selbsttragende Bauelement (1) aus Formsteinen (2) gebildet ist beziehungsweise als vorgefertigtes Element erhalten wurde.

4. Decken- und Wandelement nach einem oder mehreren der vorhergehenden Ansprüche, **dadurch gekennzeichnet, daß** das Kühl- bzw. Heizleitungssystem (3) auf der dem zu beheizenden Raum zugewandten Seite des Bauelementes (1) angeordnet ist.

5. Decken- und Wandelement nach einem oder beiden der vorhergehenden Ansprüche, **dadurch gekennzeichnet, daß** zwei Kühl- und Heizleitungssysteme (3), insbesondere für Zwischendecken oder Zwischenwandelemente, auf beiden Seiten des Bauelementes (1) angeordnet sind.

6. Decken- und Wandelement nach einem oder mehreren der vorhergehenden Ansprüche, **dadurch gekennzeichnet, daß** auf der dem zu beheizenden Raum abgewandten Seite des Bauelementes (1) eine Dämmstoffschicht (4), vorzugsweise mit reflektierender Beschichtung (5) ausgebildet ist, derart, daß die Wärmereflektion zum zu beheizenden Raum hin erfolgt.

7. Decken- und Wandelement nach einem oder mehreren der vorhergehenden Ansprüche, **dadurch gekennzeichnet, daß** die Dämmstoffschicht (4) ein wärmedämmender Putz ist.

8. Decken- und Wandelement nach einem oder mehreren der vorhergehenden Ansprüche, **dadurch gekennzeichnet, daß** die Kühl- bzw. Heizleitungssysteme (3) derart ausgebildet sind, daß sie selbst statisch wirksam werden und/oder aus Metall beziehungsweise Kunststoffhohlprofilen gebildet sind und/oder mittels aussteifender Verbindungselemente (6) untereinander das statische System verstärkend verbunden sind.

9. Decken- und Wandelement nach einem oder mehreren der vorhergehenden Ansprüche, **dadurch gekennzeichnet, daß** die Hohlkammern (7) längs zur Spannrichtung des Bauelementes (1) angeordnet sind.

10. Decken- und Wandelement nach einem oder mehreren der vorhergehenden Ansprüche, **dadurch gekennzeichnet, daß** das bzw. die Kühl- bzw. Heizleitungssysteme (3) in den Hohlräumen (7) angeordnet sind.

11. Decken- und Wandelement nach einem oder mehreren der vorhergehenden Ansprüche, **dadurch gekennzeichnet, daß** auf der dem zu beheizenden Raum zugewandten Seite Bauelementes (1) eine abstrahlfördernde Beschichtung (13) vorgesehen ist.

12. Decken- und Wandelement nach einem oder mehreren der vorhergehenden Ansprüche, **dadurch gekennzeichnet, daß** die abstrahlfördernde Beschichtung (13) ein thermisch wirksamer Putz ist.

13. Decken- und Wandelement nach einem oder mehreren der vorhergehenden Ansprüche, **dadurch gekennzeichnet, daß** die Formsteine (2) des Bauelementes (1) aus gebranntem Ton bzw. Lehm erhaltenden Ziegeln gebildet sind und/oder die seitlichen Ränder der Formsteine miteinander mittels Beton, welcher sich vorzugsweise in U-förmigen Ausnehmungen (8) in den seitlichen Rändern der Formsteine (2) befindet, verbunden sind, und/oder die Formsteine (2) durch bewehrte Stahlbetonträger und/oder Stahlträger miteinander verbunden sind.

14. Decken- und Wandelement nach einem oder mehreren der vorhergehenden Ansprüche, **dadurch gekennzeichnet, daß** die Formsteine (2) aus Beton bzw. Porenbeton gebildet sind.

15. Decken- und Wandelement nach einem oder mehreren der vorhergehenden Ansprüche, **dadurch gekennzeichnet, daß** die Formsteine (2) an der dem jeweiligen zu beheizenden Raum des Gebäudes zugewandten Stirnseite mindestens eine Rinne (9) aufweist, die zum Einlegen bzw. Festklemmen des Kühl- bzw. Heizleitungssystems (3) vorgesehen ist und/oder Befestigungselemente (12) wie z.B. Klammern oder Schellen angeordnet sind, in denen das Kühl- bzw. Heizleitungssystem (3) befestigbar ist.

16. Decken- und Wandelement nach einem oder mehreren der vorhergehenden Ansprüche, **dadurch gekennzeichnet, daß** die Rinne (9) an der Ober- und Unterseite, bzw. beidseitig des Bauelementes (1) vorgesehen ist.

17. Decken- und Wandelement nach einem oder mehreren der vorhergehenden Ansprüche, **dadurch gekennzeichnet, daß** die Rinne (9) eine solche Tiefe aufweist, daß das Kühl- bzw. Heizleitungssystem (3) nicht oder nur geringfügig aus dem Bauelement (1) hervorsteht.

## Claims

1. Ceiling or wall element with a cooling or heating conduction system integrated in the element for a wall and/or a ceiling heating according to the heat radiation system, **characterised in that** the ceiling and wall element is designed as pre-fabricated self-supporting structural member (1) with definitive static characteristics, in the structural member at least one hollow chamber (7) is provided for displacing casting compound, and the structural element can be handled further to a large extent support-free, in such a way that it can be handled further immediately after assembling.

2. Ceiling and wall element according to claim 1, **characterised in that** the statically self-supporting structural element (1) is designed as reinforced concrete element and/or pre-stressed concrete element.

3. Ceiling and wall element according to one or both of the preceding claims, **characterised in that** the statically self-supporting structural member (1) is compounded by moulded bricks (2) or has been obtained as pre-fabricated element.

4. Ceiling and wall element according to one or more of the preceding claims, **characterised in that** the cooling or heating conduction system (3) is arranged on the side of the structural member (1) facing the room to be heated.

5. Ceiling and wall element according to one or both of the preceding claims, **characterised in that** two cooling and heating conduction systems (3), in particular for intermediate ceilings or partition wall elements, are arranged on both sides of the structural member (1).

6. Ceiling and wall element according to one or more of the preceding claims, **characterised in that** on the side of the structural element (1) opposite the room to be heated a heat relief layer (4) is formed, preferably with a reflecting coating (5), in such a way that the heat reflection occurs in the direction of the room to be heated.

7. Ceiling and wall element according to one or more of the preceding claims, **characterised in that** the heat relief layer (4) is a heat-insulating cast.

8. Ceiling and wall element according to one or more of the preceding claims, **characterised in that** the cooling or heating conduction systems (3) are designed in such a way that they themselves become statically active, and/or are compounded from metal or synthetic hollow profiles, and/or are connected to each other by means of stiffening connecting elements (6) in such a way that they enhance the static system among each other.

9. Ceiling and wall element according to one or more of the preceding claims, **characterised in that** the hollow chambers (7) are arranged along the direction of clamping of the structural element (1).

10. Ceiling and wall element according to one or more of the preceding claims, **characterised in that** the cooling and heating conduction system(s) (3) is/are arranged in the hollow chambers (7).

11. Ceiling and wall element according to one or more of the preceding claims, **characterised in that** on the side of the structural element (1) facing the room to be heated a coating (13) is provided which supports radiation.

12. Ceiling and wall element according to one or more of the preceding claims, **characterised in that** the coating (13) supporting radiation is a thermally active cast.

13. Ceiling and wall element according to one or more of the preceding claims, **characterised in that** the moulded bricks (2) of the structural element (1) are compounded by bricks formed by burnt clay or loam, respectively, and/or the side edges of the moulded bricks are connected to each other by means of concrete which is preferably in U-shaped recesses (8) in the side edges of the moulded bricks (2), and/or the moulded bricks (2) are connected to each other by reinforced armoured concrete beams and/or steel girders.

14. Ceiling and wall element according to one or more of the preceding claims, **characterised in that** the moulded bricks (2) are compounded by concrete or foam mortar.

15. Ceiling and wall element according to one or more of the preceding claims, **characterised in that** the moulded bricks (2) have on their front face facing the respective room of the building to be heated at least one groove (9) provided for putting in or clamping the cooling or heating conduction system (3), and/or fastening elements (12), as for example clamps or clips, are arranged in which the cooling or heating conduction system (3) can be fastened.

16. Ceiling and wall element according to one or more of the preceding claims **characterised in that** the groove (9) is provided at the top and bottom surface, or on both sides of the structural element (1).

17. Ceiling and wall element according to one or more of the preceding claims **characterised in that** the groove (9) has such a depth that the cooling or heating conduction system (3) does not project at all or only slightly from the structural element (1).

## Revendications

1. Elément destiné à un plafond ou à un mur comportant un système de refroidissement ou de chauffage et/ou d'un plafond chauffant selon le principe d'un chauffage par rayonnement, **caractérisé en ce que** l'élément destiné à un plafond ou à un mur est préfabriqué en tant qu'élément de construction autoportant (1) ayant les propriétés statiques de la construction terminée, comportant au moins un évidement (7) réduisant le volume du matériau utilisé et pouvant être utilisé quasiment sans aucun support permettant de l'utiliser immédiatement après son montage.

2. Elément destiné à un plafond ou à un mur selon la revendication 1, **caractérisé en ce que** l'élément de construction statiquement autoportant (1) est un élément en béton armé et/ou précontraint.

3. Elément destiné à un plafond ou à un mur selon l'une des deux revendications précédentes, **caractérisé en ce que** l'élément de construction autoportant (1) est composé d'éléments préformés (2) ou est préfabriqué.

4. Elément destiné à un plafond ou à un mur selon une ou plusieurs des revendications précédentes, **caractérisé en ce que** l'ensemble des tuyaux (3) de refroidissement ou de chauffage sont situés sur la face de l'élément (1) la plus proche de la pièce à chauffer.

5. Elément destiné à un plafond ou à un mur selon une ou plusieurs des revendications précédentes, **caractérisé en ce qu'**il existe, en particulier dans le cas de plafonds suspendus ou de murs intermédiaires, deux ensembles de tuyaux (3) de refroidissement ou de chauffage situés sur chaque côté de l'élément de construction (1).

6. Elément destiné à un plafond ou à un mur selon une ou plusieurs des revendications précédentes, **caractérisé en ce qu'**une couche d'isolation (4) comportant de préférence un revêtement réfléchissant (5) est située au niveau de l'élément de construction sur le côté opposé de la pièce à chauffer de façon à ce qu'elle réfléchisse la chaleur vers la pièce chauffée.

7. Elément destiné à un plafond ou à un mur selon une ou plusieurs des revendications précédentes, **caractérisé en ce que** la couche d'isolation (4) est un enduit thermiquement isolant.

8. Elément destiné à un plafond ou à un mur selon une ou plusieurs des revendications précédentes, **caractérisé en ce que** l'ensemble de tuyaux (3) de refroidissement ou de chauffage sont configurés de façon à ce qu'ils agissent au niveau de la statique et/ou **en ce qu'**ils sont en métal ou en profilés creux en plastique et/ou **en ce qu'**ils renforcent le système statique à l'aide d'éléments d'interconnexion rigides (6).

9. Elément destiné à un plafond ou à un mur selon une ou plusieurs des revendications précédentes, **caractérisé en ce que** l'orientation des évidements (7) est parallèle à la contrainte subie par l'élément de construction (1).

10. Elément destiné à un plafond ou à un mur selon une ou plusieurs des revendications précédentes, **caractérisé en ce que** l'ensemble de tuyaux (3) de refroidissement ou de chauffage est situé à l'intérieur des évidements (7).

11. Elément destiné à un plafond ou à un mur selon une ou plusieurs des revendications précédentes, **caractérisé en ce qu'**un revêtement (13) améliorant l'émission de rayonnement est présent du côté de l'élément de construction le plus proche de la pièce à chauffer.

12. Elément destiné à un plafond ou à un mur selon une ou plusieurs des revendications précédentes, **caractérisé en ce que** le revêtement (13) améliorant l'émission de rayonnement est un enduit thermiquement approprié.

13. Elément destiné à un plafond ou à un mur selon une ou plusieurs des revendications précédentes, **caractérisé en ce que** les éléments préformés (2) de l'élément de construction (1) sont des briques en pisé ou en terre cuite et/ou **en ce que** les bords latéraux des éléments préfabriqués sont liés entre eux à l'aide de béton coulé dans des évidements ayant de préférence une forme de U et situés au niveau des bords latéraux des éléments préformés (2) et/ou **en ce que** les éléments préformés (2) sont interconnectés par des poutres en béton armé et/ou par des poutres en acier.

14. Elément destiné à un plafond ou à un mur selon une ou plusieurs des revendications précédentes, **caractérisé en ce que** les éléments préformés (2) sont fabriqués en béton ou en béton cellulaire.

15. Elément destiné à un plafond ou à un mur selon une ou plusieurs des revendications précédentes, **caractérisé en ce que** les éléments préformés (2) possèdent, sur le côté le plus proche de la pièce à chauffer, au moins une gorge (9) permettant de recevoir et de maintenir les tuyaux (3) de refroidissement et de chauffage et/ou **en ce que** des éléments de fixation (12) tels des pinces ou des colliers permettent de maintenir en place les tuyaux (3) de refroidissement ou de chauffage.

16. Elément destiné à un plafond ou à un mur selon une ou plusieurs des revendications précédentes, **caractérisé en ce qu'**une gorge (9) est prévue sur le côté supérieur, inférieur ou sur chaque côté de l'élément de construction (1).

17. Elément destiné à un plafond ou à un mur selon une ou plusieurs des revendications précédentes, **caractérisé en ce que** la gorge (9) possède une profondeur telle que les tuyaux (3) de refroidissement ou de chauffage ne dépassent que peu voire pas du tout de l'élément de construction (1).
